# EUROPÄISCHE PATENTSCHRIFT

(11) **EP 1 147 951 B1**
(45) Veröffentlichungstag und Bekanntmachung des Hinweises auf die Patenterteilung: **01.08.2007**
(21) Anmeldenummer: 01107893.8
(22) Anmeldetag: 11.04.2001
(51) Int. Cl.: B60R 22/343

(54) **Gurtaufroller**
Seat belt retractor
Enrouleur de ceinture de sécurité

(30) Priorität: 17.04.2000 DE 10018972
(43) Veröffentlichungstag der Anmeldung: 24.10.2001
(73) Patentinhaber: TRW Automotive Electronics & Components GmbH & Co. KG, 78315 Radolfzell (DE)
(72) Erfinder: Peter, Cornelius, 77815 Bühl (DE)
(74) Vertreter: Degwert, Hartmut

(56) Entgegenhaltungen:
- EP-A- 0 893 313
- DE-A- 2 421 533
- DE-A- 2 809 395
- DE-A- 2 913 591
- DE-B- 1 285 896
- US-A- 4 678 134

## Beschreibung

Die Erfindung betrifft einen Gurtaufroller für ein Insassen-Rückhaltesystem gemäß dem Oberbegriff von Anspruch 1.

Der Sperrmechanismus eines notfallsperrenden Gurtaufrollers wird üblicherweise mechanisch aktiviert. Die fahrzeugsensitive Aktivierung erfolgt gewöhnlich durch einen Trägheitskörper, der eine Klinke mit der Verzahnung einer Steuerscheibe in Eingriff bringt, die dann stehenbleibt, wobei die dann erfolgende Relativdrehung zwischen Gurtspule und Steuerscheibe zur Einsteuerung einer Sperrklinke genutzt wird. Bei der gurtbandsensitiven Auslösung wird eine relativ zur Gurtspule drehbare Trägheitsscheibe benutzt, die bei großer Gurtbandbeschleunigung hinter der Drehung der Gurtspule zurückbleibt, wobei wiederum die Relativdrehung zwischen Trägheitsscheibe und Gurtspule zur Einsteuerung der Sperrklinke ausgenutzt wird.

Bei einem Sperrmechanismus für Gurtaufroller wird ein kurzer Sperrweg angestrebt. Dieser läßt sich nur mit einer relativ komplizierten und aufwendigen Mechanik realisieren

Aus der gattungsbildenden DE-A-2 421 533 ist ein Gurtaufroller bekannt, dessen Sperrklinke durch eine Feder in Verriegelungseingriff mit einem Sperrad vorgespannt wird. Zum Entriegeln des Sperrades ist ein Elektromagnet vorgesehen, durch den die Sperrklinke außer Eingriff mit dem Sperrad gebracht werden kann.

Aus der US-A-4,678,134 ist ein Gurtaufroller bekannt, bei dem bei Überschreiten einer vorbestimmten Drehgeschwindigkeit der Gurtspule ein Sperrmechanismus aktiviert wird.

Der erfindungsgemäße Gurtaufroller ist mit einem Sperrmechanismus ausgestattet, bei dem im Lastfall die Sperrklinke nur auf Druck beansprucht wird. Gemäß der Erfindung ist die Außenverzahnung an einem an den Flansch der Gurtspule angesetzten Sperrad gebildet, über das der Flansch radial hinaussteht, wobei die Sperrklinke durch den Flansch seitlich abgestützt wird, und die Sperrklinke ist auf ihrer von dem Flansch der Gurtspule abgewandten Seite zusätzlich durch den Rahmen abgestützt. Durch die beidseitige Abstützung der Sperrklinke wird diese im Lastfall nur auf Druck beansprucht und kann besonders einfach in einer Ausnehmung eines Schenkels des Rahmens gelagert werden. Die Sperrklinke wird im normalen Betrieb des Gurtaufrollers durch den Elektromagnet außer Eingriff mit der Außenverzahnung am Flansch der Gurtspule gehalten. Mit einer geeigneten Sensorik wird ein Notfall erkannt, der eine Aktivierung des Sperrmechanismus erfordert. Dazu wird der Elektromagnet abgeschaltet, so daß die Sperrklinke sofort durch die Federkraft und/oder die Schwerkraft in die Außenverzahnung am Flansch der Gurtspule eingesteuert wird. Vorzugsweise wird die durch Federkraft hervorgerufene Vorbelastung der Sperrklinke in ihre Eingriffsstellung durch die Schwerkraft unterstützt.

Besonders vorteilhaft ist eine Ausführungsform, bei welcher der Rahmen einen Schenkel mit einem Hauptabschnitt und einem parallelversetzten, über einen abgebogenen Wandungsstreifen angeschlossenen Flügel und mit einer Lageraussparung aufweist, die sich von dem Flügel durch den abgebogenen Wandungsstreifen und bis in den Hauptabschnitt des Schenkels erstreckt, wobei ein balliges Ende der Sperrklinke schwenkbar in der Lageraussparung abgestützt ist.

Besonders vorteilhaft ist die Kombination mit einem elektrischen Antrieb der Gurtspule. Der elektrische Antrieb ersetzt die herkömmliche Aufrollerfeder und kann auch eine Vorstraffung bei einer drohenden Kollision vornehmen. Mit Hilfe einer geeigneten Sensorik und einer Antriebssteuerung in Mikroprozessortechnik können zahlreiche Funktionen des Aufrollers gesteuert werden, die bei herkömmlichen Aufrollern nur mit aufwendiger Mechanik zu verwirklichen sind. Dazu gehört insbesondere auch die Ansteuerung des Sperrmechanismus, die bei dem erfindungsgemäßen Gurtaufroller lediglich ein Signal zur Aktivierung bzw. Deaktivierung des Elektromagneten erfordert.

Ein nicht zur Erfindung gehörendes Verfahren zur Aktivierung des Sperrmechanismus bei einem Gurtaufroller der beschriebenen Art besteht darin, daß die Gurtspulendrehung erfaßt wird, daß bei einer einen vorbestimmten Wert überschreitenden Drehbeschleunigung oder Drehgeschwindigkeit der Gurtspule ein Ansteuersignal erzeugt wird und daß durch dieses Ansteuersignal der Elektromagnet abgeschaltet wird. Im normalen Gebrauch des Gurtaufrollers wird die Sperrklinke durch den Elektromagnet außer Eingriff mit der Außenverzahnung des Sperrades gehalten. Zur Minimierung des Stromverbrauchs wird das Ansteuersignal für den Elektromagneten pulsdauermoduliert. Die Drehung der Gurtspule kann magnetisch oder optisch detektiert werden. Besonders vorteilhaft sind Ausführungen mit Hall-Sensoren, die mit der Motorsteuerung auf einer Leiterplatte aufgebaut werden können. Die Leiterplatte trägt vorzugsweise auch den Elektromagneten, der die Sperrklinke steuert.

Weitere Vorteile und Merkmale der Erfindung ergeben sich aus der folgenden Beschreibung einer Ausführungsform des Gurtaufrollers und aus den beigefügten Zeichnungen. In den Zeichnungen zeigen:

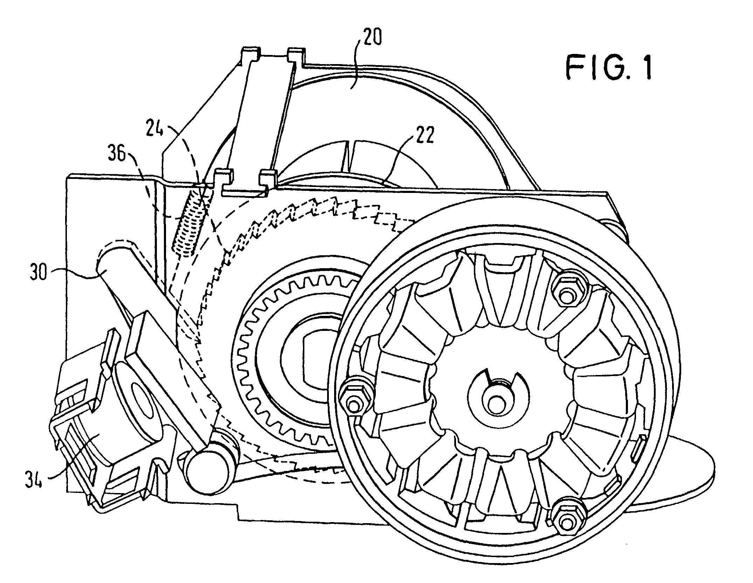

- Figur 1: eine schematische Perspektivansicht des Gurtaufrollers; und

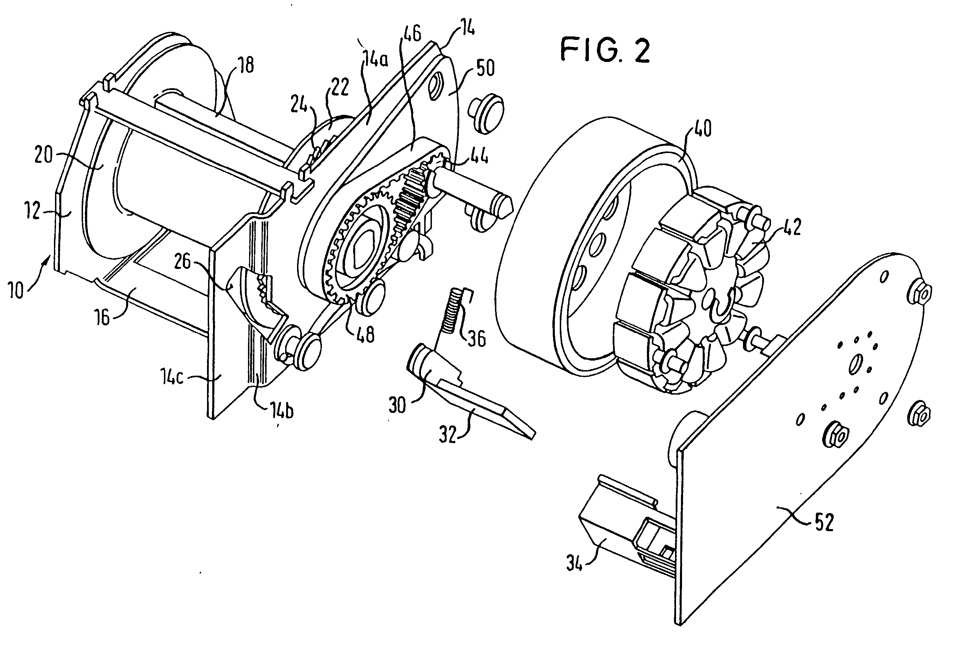

- Figur 2: eine Explosionsansicht des Gurtaufrollers.

Der Gurtaufroller hat einen Rahmen 10 mit zwei parallelen Schenkeln 12, 14, die durch Stege 16 miteinander verbunden sind. In dem Rahmen 10 ist eine Gurtspule 18 drehbar gelagert. Die Gurtspule hat zwei Flansche 20, 22. An den Flansch 22 ist ein mit einer Außenverzahnung versehenes Sperrad 24 angesetzt. Der Flansch 22 hat einen größeren Außendurchmesser als das Sperrad 24 und steht daher in Radialrichtung über dieses hinaus.

Der Schenkel 14 des Rahmens 10 hat einen Hauptabschnitt 14a und einen parallelversetzten, über einen abgebogenen Wandungsstreifen 14b angeschlossenen Flügel 14c. Eine längliche Lageraussparung 26 erstreckt sich durch den Flügel 14c, den Wandungsabschnitt 14b und bis in den Hauptabschnitt 14a des Schenkels 14 hinein. In dieser Lageraussparung 26 ist eine Sperrklinke 30 gelagert. Die Sperrklinke 30 hat eine Spitze zum Eingreifen in der Außenverzahnung des Sperrades 24 und der Spitze gegenüberliegend ein balliges Ende, das in einer entsprechenden Rundung der Lagerausnehmung 26 verschwenkbar abgestützt ist. Im eingebauten Zustand ist die Sperrklinke 30 auf ihrer einen Seite durch den Flansch 22 und auf ihrer gegenüberliegenden Seite durch den Hauptabschnitt 14a des Schenkels 14 abgestützt. Sie liegt mit dem Sperrad 24 und dem Flügel 14c, in dem das Abstützende der Lageraussparung 26 angeordnet ist, in einer Ebene.

Die Sperrklinke 30 ist mit einer seitlich abragenden Ankerplatte 32 aus ferromagnetischem Material starr verbunden. Mit der Ankerplatte 32 wirkt ein Elektromagnet 34 zusammen. Die Sperrklinke 30 wird durch eine Zugfeder 36 in dem Sinne belastet, daß sie in die Außenverzahnung des Sperrades 24 eingesteuert wird. Die Eingriffsbewegung der Sperrklinke 30 wird zusätzlich durch die Schwerkraft unterstützt. Im Ruhezustand des Elektromagneten 34 befindet sich somit die Sperrklinke 30 in Eingriff mit dem Sperrad 24, so daß die Gurtspule 18 blockiert ist. Im Normalbetrieb des Gurtaufrollers ist der Elektromagnet 34 aktiviert, so daß die Ankerplatte 32 am Kern des Elektromagneten 34 anliegt und die Sperrklinke 30 außer Eingriff mit der Außenverzahnung des Sperrades 24 gehalten wird.

Der Gurtaufroller verfügt über einen elektrischen Antrieb der Gurtspule. Dieser elektrische Antrieb ist durch einen bürstenlosen Gleichstrommotor mit Außenrotor 40 und Innenstator 42 verwirklicht, dessen Antriebsritzel 44 durch einen Zahnriemen 46 mit einem Antriebszahnrad 48 an der Seite der Gurtspule 18 gekoppelt ist. Der gesamte Antrieb ist auf einer Trägerplatte 50 aufgebaut, die an der Außenseite des Schenkels 14 begrenzt verschwenkbar gelagert ist. Die Schwenkbewegung der Trägerplatte 50 wird ausgenutzt, um den Zahnriemen 46 je nach dem erforderlichen Antriebsmoment unter Spannung zu setzen. Bei geringem Antriebsmoment ist der Zahnriemen 46 relativ locker, so daß geringe Antriebsverluste und keine Laufgeräusche auf treten. Bei hohem Antriebsmoment, insbesondere bei der Vorstraffung im Hinblick auf eine bevorstehende Kollision, wird der Zahnriemen 46 gespannt, damit keine Zähne übersprungen werden.

Auf der Trägerplatte 50 ist auch die Antriebssteuerung für den Elektromotor aufgebaut, insbesondere in Form einer Leiterplatte 52, die auch den Elektromagneten 34 trägt. Da die Leiterplatte 52 bei der Schwenkbewegung der Trägerplatte 50 mitbewegt wird, bewegt sich auch der Elektromagnet 34 relativ zur Sperrklinke 30. Die Bewegungsbahn des Elektromagneten 34 ist dabei aber so gestaltet, daß der Abstand zwischen dem Kern des Elektromagneten und der Ankerplatte 32 im wesentlichen unverändert bleibt.

Auf der Leiterplatte 52 ist auch eine Sensorik zur Erfassung der Gurtspulendrehung aufgebaut. Mit dieser Sensorik wird eine plötzliche Gurtspulendrehung anhand der Drehbeschleunigung und/oder Drehgeschwindigkeit erkannt, um den Sperrmechanismus gurtbandsensitiv anzusteuern. Im Normalbetrieb des Gurtaufrollers wird der Elektromagnet 34 mit einem pulsdauermodulierten Signal angesteuert. Zur Aktivierung des Sperrmechanismus wird der Elektromagnet 34 abgeschaltet, so daß die Sperrklinke 30 durch die Feder 36 und durch Schwerkraft unterstützt in die Außenverzahnung des Sperrades 24 eingesteuert wird.

## Patentansprüche

1. Gurtaufroller für ein Insassen-Rückhaltesystem mit einem Rahmen (10), einer in dem Rahmen (10) drehbar gelagerten Gurtspule (18) und einem Sperrmechanismus zur selektiven Blockierung der Gurtspule (18), wobei der Sperrmechanismus eine Außenverzahnung an wenigstens einem Flansch (22) der Gurtspule (18) und eine in diese Außenverzahnung einsteuerbare, am Rahmen (10) schwenkbar gelagerte Sperrklinke (30) umfaßt, die durch Federkraft und/oder Schwerkraft in eine Eingriffsstellung vorbelastet ist und durch einen Elektromagnet (34) in eine Betriebsstellung außer Eingriff mit der Außenverzahnung bewegbar ist,
**dadurch gekennzeichnet, daß** die Außenverzahnung an einem an den Flansch (22) der Gurtspule (18) angesetzten Sperrad (24) gebildet ist, über das der Flansch (22) radial hinaussteht, und daß die Sperrklinke (30) durch den Flansch (22) sowie auf ihrer von dem Flansch (22) der Gurtspule (18) abgewandten Seite zusätzlich durch den Rahmen (14) seitlich abgestützt ist.

2. Gurtaufroller nach Anspruch 1, **dadurch gekennzeichnet, daß** der Rahmen (14) einen Schenkel (14) mit einem Hauptabschnitt (14a) und einem parallelversetzten, über einen abgebogenen Wandungsstreifen (14b) angeschlossenen Flügel (14c) und mit einer Lageraussparung (26) aufweist, die sich von dem Flügel (14c) durch den abgebogenen Wandungsstreifen (14b) und bis in den Hauptabschnitt (14a) des Schenkels erstreckt und in der ein balliges Ende der Sperrklinke (30) schwenkbar abgestützt ist.

3. Gurtaufroller nach Anspruch 2, **dadurch gekennzeichnet, daß** der parallelversetzte Flügel (14c), das Sperrad (24) und die Sperrklinke (30) in einer gemeinsamen Ebene liegen.

4. Gurtaufroller nach einem der vorstehenden Ansprüche, **dadurch gekennzeichnet, daß** an der Sperrklinke (30) eine seitlich abragende Ankerplatte (32) aus ferromagnetischem Material starr angeschlossen ist.

5. Gurtaufroller nach einem der vorhergehenden Ansprüche, **dadurch gekennzeichnet, daß** die Gurtspule (18) durch einen Elektromotor (40, 42) über einen Zahnriemen (46) antreibbar ist, daß der Elektromotor (40, 42) mit einer die Motorsteuerung aufnehmenden Leiterplatte (52), auf der auch der Elektromagnet (34) aufgebaut ist, auf einer Trägerplatte (50) aufgebaut ist, die an einem Schenkel (14) des Rahmens (10) begrenzt verschwenkbar gelagert ist, wobei der Zahnriemen (40) durch Verschwenken der Trägerplatte (50) entsprechend dem jeweiligen zu übertragenden Moment unter Spannung gesetzt wird.

6. Gurtaufroller nach Anspruch 5, **dadurch gekennzeichnet, daß** bei Verschwenkung der Trägerplatte (50) der Abstand zwischen Sperrklinke (30) und Elektromagnet (34) im wesentlichen unverändert bleibt.

## Claims

1. A belt retractor for an occupant restraint system, comprising a frame (10), a belt spool (18) rotatably mounted in the frame (10), and a locking mechanism for selectively blocking the belt spool (18), the locking mechanism including an external toothing on at least one flange (22) of the belt spool (18) and a locking pawl (30) that is pivotally mounted on the frame (10) and can be caused to engage into this external toothing, the locking pawl (30) being biased by spring force and/or gravitational force into an engaged position and being adapted to be moved by an electromagnet (34) into an operating position out of engagement with the external toothing,
**characterized in that** the external toothing is formed on a locking wheel (24) that is mounted to the flange (22) of the belt spool (18), the flange (22) extending radially beyond the locking wheel (24), and that the locking pawl (30) is laterally supported by the flange (22) and additionally by the frame (14) on its side facing away from the flange (22) of the belt spool (18).

2. The belt retractor according to claim 1, **characterized in that** the frame (14) includes a side member (14) having a main section (14a) and a parallel offset wing (14c) connected by a bent wall strip (14b) and having a bearing recess (26) which extends from the wing (14c) through the bent wall strip (14b) and as far as into the main section (14a) of the side member and in which a rounded end of the locking pawl (30) is pivotally supported.

3. The belt retractor according to claim 2, **characterized in that** the parallel offset wing (14c), the locking wheel (24) and the locking pawl (30) lie in the same plane.

4. The belt retractor according to any of the preceding claims, **characterized in that** a laterally projecting armature plate (32) made of a ferromagnetic material is rigidly connected to the locking pawl (30).

5. The belt retractor according to any of the preceding claims, **characterized in that** the belt spool (18) is adapted to be driven by an electric motor (40, 42) via a toothed belt (46), that the electric motor (40, 42) is mounted on a base plate (50) together with a printed circuit board (52) which holds the motor control and on which the electromagnet (34) is also mounted, the base plate (50) being supported at a side member (14) of the frame (10) for limited pivotal movement, the toothed belt (46) being subjected to tension by a pivoting of the base plate (50) as a function of the respective torque to be transferred.

6. The belt retractor according to claim 5, **characterized in that** when the base plate (50) is pivoted, the distance between the locking pawl (30) and the electromagnet (34) remains essentially unchanged.

## Revendications

1. Enrouleur de ceinture pour un système de retenue de passager, comportant un cadre (10), une bobine de ceinture (18) montée rotative dans le cadre (10) et un mécanisme de blocage pour bloquer sélectivement la bobine de ceinture (18), le mécanisme de blocage comprenant une denture extérieure sur au moins une bride (22) de la bobine de ceinture (18), et un cliquet de blocage (30) qui peut être introduit dans cette denture extérieure et qui est monté à pivotement sur le cadre (10), le cliquet de blocage étant précontraint dans une position d'engagement par une force de ressort et/ou par gravité et pouvant être déplacé par un électroaimant (34) vers une position de fonctionnement hors d'engagement avec la denture extérieure,
**caractérisé en ce que** la denture extérieure est réalisée sur une roue à rochet (24) rapportée sur la bride (22) de la bobine de ceinture (18), la bride (22) faisant saillie radialement de la roue à rochet, et **en ce que** le cliquet de blocage (30) est supporté latéralement par la bride (22) et additionnellement par le cadre (14) sur son côté détourné de la bride (22) de la bobine de ceinture (18).

2. Enrouleur de ceinture selon la revendication 1, **caractérisé en ce que** le cadre (14) comporte une branche (14) présentant un tronçon principal (14a) et une aile (14c) décalée parallèlement et raccordée par une bande de paroi (14b) courbée, et présentant un évidement de palier (26) qui s'étend depuis l'aile (14c) à travers la bande de paroi (14b) courbée et jusque dans le tronçon principal (14a) de la branche et dans lequel une extrémité bombée du cliquet de blocage (30) est supportée à pivotement.

3. Enrouleur de ceinture selon la revendication 2, **caractérisé en ce que** l'aile (14c) décalée parallèlement, la roue à rochet (24) et le cliquet de blocage (30) sont agencés dans un plan commun.

4. Enrouleur de ceinture selon l'une des revendications précédentes, **caractérisé en ce qu'**une plaque d'armature (32) en matière ferromagnétique, faisant saillie latéralement, est reliée de manière rigide au cliquet de blocage (30).

5. Enrouleur de ceinture selon l'une des revendications précédentes, **caractérisé en ce que** la bobine de ceinture (18) peut être entraînée par un moteur électrique (40, 42) via une courroie dentée (46), **en ce que** le moteur électrique (40, 42) est monté sur une plaque support (50) avec une carte de circuits imprimés (52) recevant la commande moteur et sur laquelle est également monté l'électroaimant (34), la plaque support étant montée à pivotement limité sur une branche (14) du cadre (10), la courroie dentée (40) étant mise sous tension par le pivotement de la plaque support (50) en fonction du couple respectif à transmettre.

6. Enrouleur de ceinture selon la revendication 5, **caractérisé en ce que** la distance entre le cliquet de blocage (30) et l'électroaimant (34) reste essentiellement inchangée lors d'un pivotement de la plaque support (50).
